# EUROPÄISCHE PATENTANMELDUNG

(11) **EP 4 844 511 A1**
(43) Veröffentlichungstag der Anmeldung: **25.11.2026**
(21) Anmeldenummer: 26178627.1
(22) Anmeldetag: 13.05.2026
(51) Int. Cl.: G05B 19/418

(54) **VERFAHREN ZUM BETRIEB EINER PRODUKTHANDHABUNGSVORRICHTUNG, HANDHABUNGSSYSTEM UND FORMATTEIL**

(30) Priorität: 19.05.2025 DE 102025119330
(71) Anmelder: Syntegon Technology GmbH, 70372 Stuttgart (DE)
(72) Erfinder: Neumann, Jens, 71546 Aspach (DE); Bauer, Harald, 74549 Wolpertshausen (DE); Schumann, Thorsten, 74585 Rot Am See (DE); Täger, Maik, 73488 Ellenberg (DE); Schwarz, Sebastian, 97084 Würzburg (DE)
(74) Vertreter: Daub, Thomas

(57) **Zusammenfassung**

Die Erfindung geht aus von einem Verfahren zu einem Betrieb einer Produkthandhabungsvorrichtung (10) mit zumindest einem elektrodynamisch bewegbaren Mover (12), insbesondere Planarmover, und mit zumindest einer Aufnahmeeinheit (14), welche an dem zumindest einen Mover (12) angeordnet ist, wobei in einem Betrieb ein Formatteil (16) kraft- und/oder formschlüssig von der Aufnahmeeinheit (14) aufgenommen und von dem Mover (12) zumindest in einer Transportebene (18), insbesondere XY-Ebene, befördert wird.

Es wird vorgeschlagen, dass in zumindest einem Verfahrensschritt (54) eine Lage des Formatteils (16) relativ zu einer Lage des zumindest einen Movers (12) ermittelt wird.

## Beschreibung

### Stand der Technik

Es ist bereits ein Verfahren zu einem Betrieb einer Produkthandhabungsvorrichtung mit zumindest einem elektrodynamisch bewegbaren Mover, insbesondere Planarmover, und mit zumindest einer Aufnahmeeinheit, welche an dem zumindest einen Mover angeordnet ist, wobei in einem Betrieb ein Formatteil kraft- und/oder formschlüssig von der Aufnahmeeinheit aufgenommen und von dem Mover zumindest in einer Transportebene, insbesondere XY-Ebene, befördert wird, vorgeschlagen worden.

Aus DE 10 2022 134 165 B4 ist beispielsweise bereits eine Produkthandhabungsvorrichtung mit einem Formatteil und mit zumindest einem Mover bekannt. Die bereits bekannte Produkthandhabungsvorrichtung weist den Nachteil auf, dass die Lage des Formatteils relativ zum Mover nicht bekannt ist. Die Lage kann nur aufwändig manuell und nicht automatisch vermessen werden. Ferner kann eine sterile Umgebung durch die manuelle Vermessung der Lage nicht aufrechterhalten werden.

Des Weiteren sind aus DE 10 2020 127 012 A1 und DE 10 2020 212 641 A1 bereits Verfahren zu einem Betrieb von Produkthandhabungsvorrichtungen, die zumindest einen elektrodynamisch bewegbaren Mover, insbesondere Planarmover, und zumindest eine Aufnahmeeinheit, welche an dem zumindest einen Mover angeordnet ist, umfassen, bekannt, wobei bei den bekannten Verfahren in einem Betrieb ein Formatteil kraft- und/oder formschlüssig von der Aufnahmeeinheit aufgenommen und von dem Mover zumindest in einer Transportebene, insbesondere XY-Ebene, befördert wird.

Die Aufgabe der Erfindung besteht insbesondere darin, ein gattungsgemäßes Handhabungssystem, ein gattungsgemäßes Formatteil und ein gattungsgemäßes Verfahren mit verbesserten Eigenschaften hinsichtlich einer Präzision, einer Prozesssicherheit sowie einer Automatisierung bereitzustellen. Die Aufgabe wird erfindungsgemäß durch die Merkmale des Anspruchs 1, 10 bzw. 11 gelöst, während vorteilhafte Ausgestaltungen und Weiterbildungen der Erfindung den Unteransprüchen entnommen werden können

### Offenbarung der Erfindung

Die Erfindung geht aus von einem Verfahren zu einem Betrieb einer Produkthandhabungsvorrichtung mit zumindest einem elektrodynamisch bewegbaren Mover, insbesondere Planarmover, und mit zumindest einer Aufnahmeeinheit, welche an dem zumindest einen Mover angeordnet ist, wobei in einem Betrieb ein Formatteil kraft- und/oder formschlüssig von der Aufnahmeeinheit aufgenommen und von dem Mover zumindest in einer Transportebene, insbesondere XY-Ebene, befördert wird.

Es wird vorgeschlagen, dass in zumindest einem Verfahrensschritt eine Lage des Formatteils relativ zu einer Lage des zumindest einen Movers ermittelt wird.

Durch die erfindungsgemäße Ausgestaltung des Verfahrens kann vorteilhaft eine hohe Präzision und/oder Betriebssicherheit bereitgestellt werden, da insbesondere die Lage des Formatteils relativ zu einer Lage des zumindest einen Movers ermittelt werden kann, wodurch Abweichungen zwischen einer Ist-Position und einer Soll-Position des Formatteils erkannt werden können. Vorteilhaft kann ein geringer Wartungsaufwand bereitgestellt werden, da insbesondere die Lage des Formatteils relativ zu einer Lage des zumindest einen Movers ermittelt werden kann, wodurch Fehlern in einer Produktion, beispielsweise bei einem Befüllen von Behältern o. dgl., entgegengewirkt werden kann. Vorteilhaft kann ein hoher Hygienestandard erreicht werden, da insbesondere durch die Ermittlung der Lage des Formatteils Fehlern in der Produktion entgegengewirkt werden kann, wodurch ein manuelles Eingreifen durch einen Bediener auf ein Minimum reduziert werden kann und somit eine ungewollte Verunreinigung von Produkten gering gehalten werden kann.

Die Produkthandhabungsvorrichtung weist, insbesondere zumindest einen, bevorzugt zumindest zwei elektrodynamisch bewegbare Mover auf. Vorzugsweise ist der zumindest eine elektrodynamisch bewegliche Mover als ein Planarmover ausgebildet. Vorzugsweise können die zumindest zwei elektrodynamisch beweglichen Mover durch einen virtuellen Mover abgebildet werden. Vorzugsweise wird eine Bewegung der zwei Mover durch die Bewegung des virtuellen Movers beschrieben.

Vorzugsweise sind die zumindest zwei elektrodynamisch bewegbaren Mover mechanisch über die Aufnahmeeinheit miteinander gekoppelt. Vorzugsweise ist das Formatteil von der Aufnahmeeinheit aufgenommen. Vorzugsweise ist das Formatteil in der Aufnahmeeinheit gelagert. Vorzugsweise ist das Formatteil kraft- und/der formschlüssig mit der Aufnahmeeinheit verbunden. Das Formatteil ist insbesondere aus der Aufnahmeeinheit herausnehmbar und gegen ein anderes Formatteil austauschbar. Vorzugsweise kann das Formatteil zumindest im Wesentlichen senkrecht zu der Transportebene, insbesondere in Vertikalrichtung, bewegt werden, indem sich die zumindest zwei elektrodynamisch beweglichen Mover auseinanderbewegen oder aufeinander zubewegen. Vorzugsweise kann das Formatteil befördert werden, indem die zwei elektrodynamisch beweglichen Mover bei konstantem Abstand zueinander in der Transportebene, insbesondere XY-Ebene, bewegt werden. Vorzugsweise ist die Transportebene zumindest im Wesentlichen parallel zu einer Horizontalrichtung angeordnet. Unter "kraft- und/oder formschlüssig verbunden" soll dabei insbesondere eine lösbare Verbindung verstanden werden, wobei eine Haltekraft zwischen zwei Bauteilen vorzugsweise durch einen geometrischen Eingriff der Bauteile ineinander und/oder eine Reibkraft zwischen den Bauteilen übertragen wird.

Das Formatteil ist als eine Halteeinheit ausgebildet. Bevorzugt ist das Formatteil zu einem, insbesondere kraft- und/oder formschlüssigen, Aufnehmen, insbesondere Fixieren, zumindest eines Produkts der Vielzahl an Produkten an der zumindest einen Aufnahmeeinheit und/oder zu einem Bewegen, insbesondere Anheben, zumindest eines Produkts der Vielzahl an Produkten eingerichtet. Vorzugsweise weist das Formatteil eine Vielzahl an Produktausnehmungen, insbesondere ein Lochbild, auf. Die Produktausnehmungen sind bevorzugt zur Aufnahme von Produkten eingerichtet. Es ist jedoch denkbar, dass die Produktausnehmungen zur Aufnahme der Produkte eine beliebige Anordnung aufweisen.

Vorzugsweise wird die Lage des Formatteils ermittelt, um die Produkte präzise handhaben zu können. Beispielsweise wird das Formatteil im Betrieb unter einer Handhabungsvorrichtung, beispielsweise Roboterarm, positioniert, welche die Produkte aus dem Formatteil aufnimmt, im Formatteil befüllt und/oder in einer vergleichbaren, dem Fachmann als sinnvoll erscheinenden Weise handhabt. Vorzugsweise wird das Formatteil von dem zumindest einen Mover relativ zu der Handhabungsvorrichtung positioniert. Vorzugsweise wird die Lage des Formatteils messtechnisch erfasst, um eine präzise Positionierung zu ermöglichen. Unter einer "Lage" soll insbesondere eine räumliche Position eines Objekts, insbesondere des Formatteils, innerhalb eines vorgegebenen Koordinatensystems, insbesondere in einem XYZ-Raum, verstanden werden. Vorzugsweise wird die Lage als eine relative Position zu weiteren Objekten, Bauteilen oder Funktionseinheiten, insbesondere zu dem zumindest einen Mover und/oder dem virtuellen Mover, bezeichnet. Alternativ oder zusätzlich könnte mit der Lage eine absolute Position des Formatteils im XYZ-Raum beschrieben werden. Insbesondere umfasst die Lage die Koordinaten in einer oder mehreren Raumrichtungen, insbesondere entlang einer X-, Y- und/oder Z-Achse, wobei zusätzlich auch eine Orientierung, beispielsweise eine Drehlage berücksichtigt werden kann. Vorzugsweise wird die Lage automatisch ermittelt. Vorzugsweise wird die Lage regelmäßig ermittelt. Vorzugsweise wird die Lage des Formatteils relativ zur Lage des zumindest einen Movers erfasst. Alternativ könnte die Lage des Formatteils auch relativ zu der Handhabungsvorrichtung, beispielsweise dem Roboterarm, ermittelt werden. Alternativ könnte die Lage auch absolut, beispielsweise als XYZ-Koordinaten, erfasst werden. Vorzugsweise wird mit der Lage des Formatteils ein Abgleich der Position und Orientierung des Formatteils mit der Position des zumindest einen Movers durchgeführt.

Ferner wird vorgeschlagen, dass die Lage des Formatteils mittels einer Sensoreinheit, insbesondere eines Laserdistanzsensors, ermittelt wird. Vorteilhaft kann ein hoher Automatisierungsgrad erreicht werden, da insbesondere die Lage des Formatteils mittels der Sensoreinheit ermittelt werden kann. Vorzugsweise wird die Distanz mit der Sensoreinheit, insbesondere dem Laserdistanzsensor, optisch erfasst. Vorzugsweise wird die Distanz mit der Sensoreinheit, insbesondere dem Laserdistanzsensor, kontaktlos erfasst. Vorzugsweise ist die Sensoreinheit ortsfest zu der Transportebene angeordnet. Vorzugsweise kann der zumindest eine Mover relativ zu der Sensoreinheit, beispielsweise in X-, Y-, Z-Richtung bewegt und/oder gedreht werden. Vorzugsweise weist die Sensoreinheit zumindest eine Messrichtung auf. Vorzugsweise wird die Distanz in die Messrichtung erfasst. Unter "ortsfest" soll dabei insbesondere verstanden werden, dass ein Objekt, insbesondere die Sensoreinheit, relativ zu einer Bezugsstruktur, insbesondere der Transportebene, unveränderlich angeordnet ist.

Des Weiteren wird vorgeschlagen, dass die Lage des Formatteils innerhalb der Transportebene aus zumindest einem Markierungsabstand zwischen einer ersten Messmarkierung des Formatteils und zumindest einer weiteren Messmarkierung des Formatteils ermittelt wird. Vorteilhaft kann eine geringe Komplexität bereitgestellt werden, da insbesondere die Lage des Formatteils aus dem Markierungsabstand von zwei Messmarkierungen ermittelt werden kann. Vorzugsweise wird mit der Lage eine Orientierung des Formatteils in einer Ebene beschrieben, welche zumindest im Wesentlichen parallel zu der Transportebene angeordnet ist. Vorzugsweise umfasst die Lage zumindest eine translatorische und/oder eine rotatorische Lage des Formatteils relativ zur Aufnahmeeinheit und/oder relativ zu den beiden Movern. Vorzugsweise wird der Markierungsabstand aus zumindest zwei Abständen errechnet. Vorzugsweise ist der erste Abstand als ein kürzester Abstand der ersten Messmarkierung zu der Sensoreinheit gebildet. Vorzugsweise ist der zumindest eine weitere Abstand als ein kürzester Abstand der zumindest einen weiteren Messmarkierung zu der Sensoreinheit gebildet. Die Lage wird vorzugsweise aus der Differenz der zumindest zwei Abstände errechnet. Vorzugsweise ist die Lage aus einer Position der ersten Messmarkierung und der zumindest einen weiteren Messmarkierung eindeutig definiert.

Überdies wird vorgeschlagen, dass eine Lageabweichung des Formatteils zu der Lage des zumindest einen Movers aus zumindest einem Markierungsabstand zwischen einer ersten Messmarkierung des Formatteils und zumindest einer weiteren Messmarkierung des Formatteils ermittelt wird. Vorteilhaft kann eine hohe Betriebssicherheit bereitgestellt werden, da insbesondere die Lageabweichung des Formatteils zu der Lage des zumindest einen Movers ermittelt werden kann, wodurch beispielsweise überprüft werden kann, ob eine Lagetoleranz eingehalten wird. Vorzugsweise weist das Formatteil zumindest eine Soll-Lage auf. Vorzugsweise weist das Formatteil zumindest eine Ist-Lage auf. Vorzugsweise ist die Lageabweichung als eine Differenz zwischen der Ist-Lage und der Soll-Lage ausgebildet. Vorzugsweise wird die Lageabweichung als die Abweichung zwischen der Soll-Lage und der Ist-Lage in der Ebene parallel zur Transportebene ausgedrückt. Es ist beispielsweise denkbar, dass der zumindest eine Mover und/oder der virtuelle Mover mit einem Offset betrieben wird, welcher die Lageabweichung ausgleicht.

Weiterhin wird vorgeschlagen, dass zumindest eine Lageabweichung des Formatteils zu der Lage des zumindest einen Movers ausgeglichen wird, indem der zumindest eine Mover bewegt wird, insbesondere um das Formatteil zu einer Handhabungsvorrichtung auszurichten. Vorteilhaft kann eine hohe Präzision und/oder Betriebssicherheit bereitgestellt werden, da insbesondere die Lage des Formatteils zur Handhabungsvorrichtung ausgerichtet werden kann. Vorzugsweise wird das Formatteil aus der Ist-Lage des Formatteils in die Soll-Lage des Formatteils überführt, indem der zumindest eine Mover bewegt wird. Vorzugsweise wird das Formatteil zu der Handhabungsvorrichtung, insbesondere einem Robotergreifer der Handhabungsvorrichtung, ausgerichtet, indem die Ist-Lage des Formatteils in die Soll-Lage des Formatteils überführt wird.

Ferner wird vorgeschlagen, dass das Formatteil zumindest ein Messelement, insbesondere zumindest eine Messfläche, aufweist, welches zumindest im Wesentlichen parallel zu einer Messrichtung einer Sensoreinheit angeordnet ist, wobei eine Position des Messelements iterativ angenähert wird, indem eine Distanz zumindest im Wesentlichen senkrecht zu der Messrichtung abgetastet wird. Vorteilhaft kann eine besonders hohe Präzision bereitgestellt werden, da insbesondere eine Position senkrecht zur Messrichtung ermittelt werden kann. Vorteilhaft kann eine besonders hohe Flexibilität bereitgestellt werden, da insbesondere mit der Sensoreinheit die Position auch parallel zur Messfläche erfasst werden kann. Es kann ein Betrieb mit geringen Kosten und/oder unter hohen Hygienestandards bereitgestellt werden, da insbesondere die Messung auch in Messrichtung und damit mit nur einer Sensoreinheit durchgeführt werden kann. Vorzugsweise wird das Formatteil durch den zumindest einen Mover zumindest im Wesentlichen senkrecht zu der Messfläche und/oder parallel zu der Transportebene hin- und herbewegt, wobei das Messelement zur Positionsbestimmung des Messelements an der Sensoreinheit vorbeibewegt wird. Vorzugsweise wird das Messelement mittels der Sensoreinheit erfasst, indem ein Messsprung, insbesondere Distanzsprung, in der gemessenen Distanz ausgewertet wird. Vorzugsweise wird die Position des Messelements anhand einer Auswertung der mittels der Sensoreinheit erfassten Daten erkannt.

Vorzugsweise ist der Messsprung an der Position des Messelements angeordnet. Vorzugsweise wird die Position des Messelements iterativ ermittelt, indem das Messelement mehrfach vermessen wird, wobei ein Verfahrweg der Hin- und Herbewegung iterativ verringert, beispielsweise halbiert wird. Unter "zumindest im Wesentlichen" soll in diesem Zusammenhang insbesondere verstanden werden, dass eine Abweichung von einem vorgegebenen Wert insbesondere weniger als 25%, vorzugsweise weniger als 10% und besonders bevorzugt weniger als 5% des vorgegebenen Werts abweicht.

Zusätzlich wird vorgeschlagen, dass eine als Planabweichung ausgebildete Lageabweichung des Formatteils senkrecht zu der Transportebene, insbesondere in Z-Richtung, erfasst wird, indem ein Höhenverlauf des Formatteils bei einer Bewegung des Formatteils in der Transportebene, insbesondere XY-Ebene, erfasst wird. Vorteilhaft kann eine hohe Betriebssicherheit bereitgestellt werden, da insbesondere fehlerhaft an der Aufnahmeeinheit angeordnete, insbesondere montierte, Formatteile identifiziert werden können. Vorzugsweise wird ein Höhenverlauf, insbesondere in Z-Richtung, zumindest einer Fläche des Formatteils erfasst. Insbesondere wird der Höhenverlauf der Fläche des Formatteils ermittelt, während das Formatteil während der Messung in der Transportebene verfahren wird. Insbesondere wird das Formatteil zur Messung des Höhenverlaufs zumindest im Wesentlichen senkrecht zu der Messrichtung bewegt. Insbesondere wird die Planabweichung an einer Fläche des Formatteils erfasst, welche in einer Soll-Lage zumindest im Wesentlichen parallel zu der Transportebene angeordnet ist. Beispielsweise könnte durch die Erfassung der Planabweichung ein fehlerhaft in die Aufnahmeeinheit eingesetztes Formatteil detektiert werden. Unter einer "Planabweichung" soll dabei insbesondere eine montage-, betriebs-, oder fertigungsbedingte Abweichung einer Fläche parallel zu der Transportebene verstanden werden.

Weiter wird vorgeschlagen, dass eine Codiereinheit des Formatteils zumindest eine Profilerhebung aufweist, welche zur Identifikation, insbesondere während der Ermittlung der Lage des Formatteils, abgetastet wird. Vorteilhaft kann eine geringe Komplexität und/oder Fehleranfälligkeit bereitgestellt werden, da insbesondere das Formatteil eindeutig identifiziert werden kann. Vorteilhaft kann eine hohe Identifikationsgeschwindigkeit bereitgestellt werden, da insbesondere die Codiereinheit während der Vermessung der Lage ausgelesen werden kann und/oder insbesondere die Sensoreinheit nicht zusätzlich zur Identifikation des Formatteils angefahren werden muss. Vorzugsweise ist die Codiereinheit als eine mechanische Codiereinheit ausgebildet. Vorzugsweise weist die Codiereinheit zumindest ein dreidimensionales Profil auf. Vorzugsweise wird von der Codiereinheit durch die Profilerhebung ein binärer Code dargestellt. Beispielsweise könnte die Profilerhebung eine 1 und keine Profilerhebung eine 0 abbilden. Vorzugsweise ist der binäre Code zumindest zweistellig, vorteilhaft zumindest vierstellig. Es ist alternativ aber denkbar, dass die Profilerhebung einen, insbesondere stetigen, Verlauf aufweist, welcher eine beliebige Codierung abbilden könnte. Vorzugsweise wird das Formatteil von dem zumindest einen Mover an der Sensoreinheit vorbeibewegt, wodurch die Codiereinheit ausgelesen, insbesondere die Profilerhebung abgerastert, wird.

Überdies wird vorgeschlagen, dass eine Messung, mit welcher die Lage des Formatteils ermittelt wird, in zumindest einem Kalibrierschritt, beispielsweise mittels eines Mastermovers, kalibriert wird, indem zumindest ein Kalibrierpunkt, bevorzugt zumindest sieben Kalibrierpunkte, erfasst wird/werden und zumindest ein Abstand, bevorzugt mehrere Abstände, zwischen den Kalibrierpunkten, als ein Referenzwert gesetzt wird/werden. Vorteilhaft kann eine hohe Präzision und/oder Betriebssicherheit bereitgestellt werden, da insbesondere die Messung,
insbesondere die Sensoreinheit, kalibriert werden können. Die Messung wird vorzugsweise mit einem Kalibriermover kalibriert. Der Kalibriermover könnte zumindest einen, bevorzugt zumindest sieben und vorteilhaft eine Vielzahl an Kalibrierpunkten aufweisen. Vorzugsweise weisen die Kalibrierpunkte und/oder ein Abstand der Kalibrierpunkte zueinander eine sehr hohe Genauigkeit auf. Alternativ oder zusätzlich könnte die Messung auch mit einer Produkthandhabungsvorrichtung, welche eine Vielzahl an präzisen Kalibrierpunkten aufweist, kalibriert werden. Vorzugsweise wird die Messung anhand der gemessenen Referenzwerte kalibriert. Vorzugsweise handelt es sich bei dem Referenzwert um einen Kalibrierwert, der im Rahmen eines Abgleichverfahrens, insbesondere zur Erkennung von Abweichungen und/oder zur Justierung eines Systems, herangezogen wird.

Des Weiteren wird ein Handhabungssystem mit zumindest einem Formatteil, an dem, insbesondere in dem, zumindest ein zu bearbeitender Gegenstand, insbesondere Behälter, anordenbar ist, mit zumindest einer Produkthandhabungsvorrichtung, welche zumindest einen elektrodynamisch bewegbaren Mover, insbesondere Planarmover, und zumindest eine an dem Mover angeordnete Aufnahmeeinheit zu einer form- und/oder kraftschlüssigen Aufnahme des Formatteils umfasst, und mit zumindest einer Steuer- oder Regeleinheit zu einer Durchführung des erfindungsgemäßen Verfahrens, vorgeschlagen. Vorteilhaft kann eine hohe Präzision und/oder Betriebssicherheit bereitgestellt werden, da insbesondere die Lage des Formatteils relativ zur Lage des zumindest einen Movers ermittelt und/oder das Formatteil zur Handhabungsvorrichtung ausgerichtet werden kann. Vorzugsweise ist das Handhabungssystem als ein elektrodynamisches Transportsystem, bevorzugt als elektrodynamisches Planartransportsystem, ausgebildet. Das Handhabungssystem weist vorzugsweise eine, einem Fachmann bereits bekannte Ausgestaltung auf, wie diese beispielsweise von Produkten der Firma Planar Motor (PMI) einem Fachmann bekannt ist. Bevorzugt umfasst das elektrodynamische Transportsystem eine Vielzahl, insbesondere horizontal ausgerichteter, Statoren, vorzugsweise so genannte Planarkacheln, die mit elektromagnetischen Antriebselementen, insbesondere Spuleneinheiten, wie beispielsweise Elektromagneten, ausgestattet sind und miteinander verbunden sind, insbesondere um zusammen eine planare Bewegungsebene für den/die elektrodynamisch beweglichen Mover zu bilden. Das elektrodynamische Transportsystem umfasst vorzugsweise eine Vielzahl an elektrodynamisch beweglichen Movern, die relativ zu den Statoren, insbesondere kontaktlos, beweglich sind, insbesondere infolge eines Zusammenwirkens von Permanentmagneteinheiten der elektrodynamisch beweglichen Mover mit den elektromagnetischen Antriebselementen der Statoren. Bevorzugt sind zumindest zwei elektrodynamische Mover der Vielzahl an elektrodynamisch beweglichen Movern einer einzelnen Aufnahmeeinheit zugeordnet, um die Aufnahmeeinheit bevorzugt entlang einer zumindest im Wesentlichen parallel zur Bewegungsebene verlaufenden Richtung relativ zu den Statoren zu bewegen. Die Statoren bilden vorzugsweise eine Antriebsfläche, entlang oder auf der die elektrodynamisch beweglichen Mover, insbesondere schwebend, bewegbar sind. Insbesondere kann das elektrodynamische Transportsystem auf eine, einem Fachmann bereits bekannte Art und Weise eine Position der einzelnen elektrodynamisch beweglichen Mover relativ zu den Statoren erfassen und auswerten, um eine Steuerung oder Regelung einer Bewegung der elektrodynamisch beweglichen Mover zu realisieren.

Die elektrodynamisch beweglichen Mover weisen vorzugsweise mehr als zwei Freiheitsgrade, insbesondere zumindest sechs Freiheitsgrade, auf. Bevorzugt weisen die elektrodynamisch beweglichen Mover jeweils zumindest eine Bewegungsachse, insbesondere drei Bewegungsachsen, auf, entlang und/oder um die die elektrodynamisch beweglichen Mover relativ zu den Statoren beweglich sind, insbesondere infolge eines Zusammenwirkens der Permanentmagneteinheiten der elektrodynamisch beweglichen Mover mit den Spuleneinheiten der Statoren. Die Bewegungsachse/n verläuft/verlaufen vorzugsweise zumindest im Wesentlichen parallel oder zumindest im Wesentlichen senkrecht zur Horizontalebene. Unter "im Wesentlichen parallel" soll insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Der Ausdruck "im Wesentlichen senkrecht" soll insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Insbesondere ist die Steuer- und/oder Regeleinheit dazu eingerichtet, die Lage des Formatteils relativ zu der Lage des zumindest einen Movers zu ermitteln und/oder die Messdaten der Sensoreinheit zu verarbeiten. Unter "eingerichtet" soll insbesondere speziell programmiert, ausgelegt und/oder ausgestattet verstanden werden. Darunter, dass ein Objekt zu einer bestimmten Funktion eingerichtet ist, soll insbesondere verstanden werden, dass das Objekt diese bestimmte Funktion in zumindest einem Anwendungs- und/oder Betriebszustand erfüllt und/oder ausführt.

Ferner geht die Erfindung aus von einem, insbesondere dem bereits zuvor genannten, Formatteil für ein erfindungsgemäßes Handhabungssystem. Es wird vorgeschlagen, dass das Formatteil eine erste Messmarkierung und zumindest eine weitere Messmarkierung umfasst. Es können vorteilhafte Eigenschaften hinsichtlich einer Konstruktion bereitgestellt werden, da insbesondere die Lage des Formatteils aus dem Markierungsabstand von zwei Messmarkierungen ermittelt werden kann, wodurch auf weitere Sensoren und/oder Messmarkierungen verzichtet werden kann. Vorzugsweise ist die erste und/oder die zumindest eine weitere Messmarkierung als eine Messfläche ausgebildet, welche zumindest im Wesentlichen senkrecht zu der Messrichtung und/oder zumindest im Wesentlichen senkrecht zu der Transportebene angeordnet ist. Vorzugsweise weist die erste Mesmarkierung und die zumindest eine weitere Messmarkierung einen festen Abstand zueinander auf. Insbesondere ist die erste Messmarkierung und/oder die zumindest eine weitere Messmarkierung einstückig mit dem Formatteil verbunden. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren.

Ergänzend wird vorgeschlagen, dass das Formatteil eine Codiereinheit umfasst, welche an einer Außenoberfläche des Formatteils, bevorzugt zwischen den zwei Messmarkierungen, angeordnet ist. Es können vorteilhafte Eigenschaften hinsichtlich einer Konstruktion bereitgestellt werden, da insbesondere die Codiereinheit an der Außenoberfläche des Formatteils angeordnet ist. Vorzugsweise ist die Außenoberfläche für die Sensoreinheit optisch zugänglich angeordnet. Vorzugsweise ist die Außenoberfläche zumindest im Wesentlichen senkrecht zu der Messrichtung und/oder zumindest im Wesentlichen senkrecht zu der Transportebene angeordnet. Es ist denkbar, dass an zumindest zwei und/oder zumindest vier Außenflächen des Formatteils je eine Codiereinheit mit zumindest einer Profilerhebung angeordnet ist, wodurch eine Identifizierung des Formatteils und/oder des Produkts an mehreren Seiten ermöglicht wird.

Das erfindungsgemäße Verfahren zum Betrieb der Produkthandhabungsvorrichtung, das erfindungsgemäße Handhabungssystem und/oder das erfindungsgemäße Formatteil sollen/soll hierbei nicht auf die oben beschriebene Anwendung und Ausführungsform beschränkt sein. Insbesondere können/kann das erfindungsgemäße Verfahren zum Betrieb der Produkthandhabungsvorrichtung, das erfindungsgemäße Handhabungssystem und/oder das erfindungsgemäße Formatteil zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Handhabungssystems mit einer Produkthandhabungsvorrichtung,
- Fig. 2: eine schematische Darstellung der Produkthandhabungsvorrichtung mit einem Formatteil,
- Fig. 3: eine schematische Draufsicht einer Codiereinheit des Formatteils,
- Fig. 4: eine schematische Draufsicht einer Lage des Formatteils,
- Fig. 5: eine schematische Draufsicht des Formatteils mit einem Messelement,
- Fig. 6: eine schematische Darstellung einer Planlage des Formatteils und
- Fig. 7: ein schematisches Ablaufdiagramm eines Verfahrens zum Betrieb der Produkthandhabungsvorrichtung.

### Beschreibung des Ausführungsbeispiels

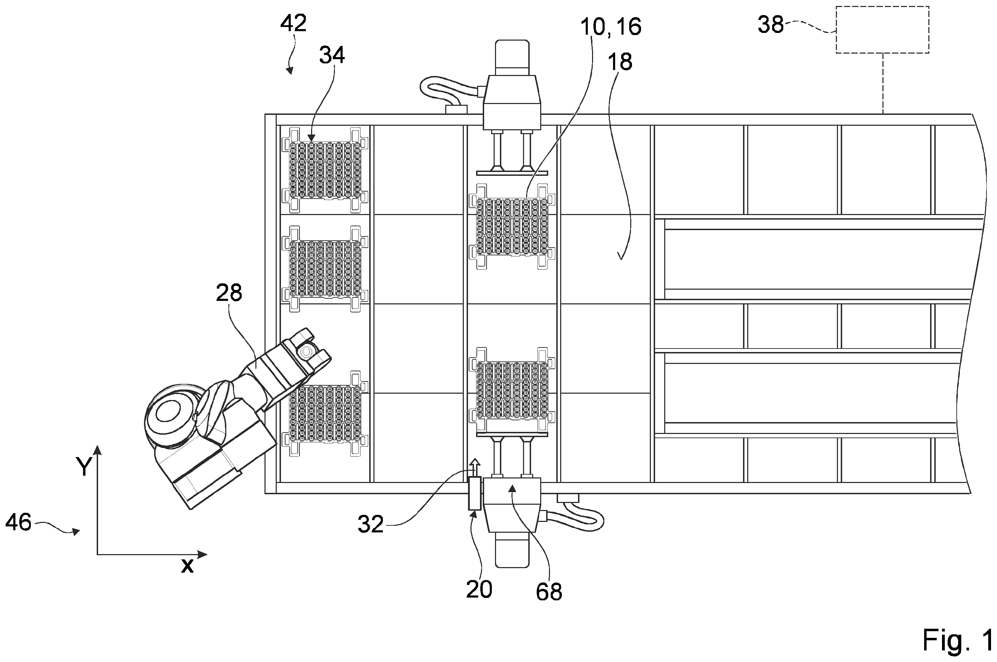

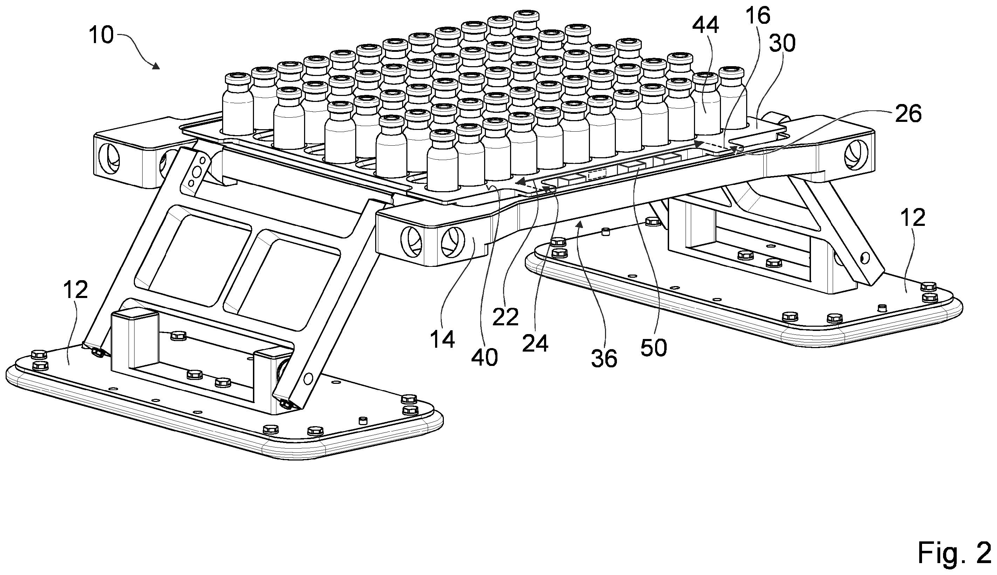

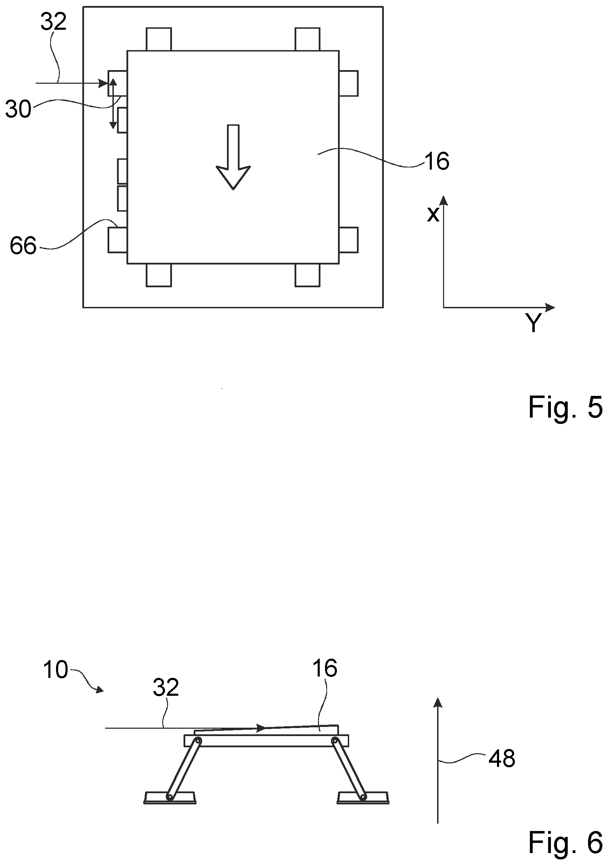

Die Figur 1 zeigt eine schematische Darstellung eines Handhabungssystems 42. Das Handhabungssystem 42 ist als ein elektrodynamisches Transportsystem ausgebildet. Das Handhabungssystem 42 weist eine XY-Ebene 46 auf. Das Handhabungssystem 42 weist eine Transportebene 18 auf. Die Transportebene 18 ist parallel zu der XY-Ebene 46 angeordnet. Das Handhabungssystem 42 weist eine Z-Richtung 48 auf, vgl. Fig. 6. Die Z-Richtung 48 ist senkrecht zu der Transportebene 18 angeordnet. Das Handhabungssystem 42 weist eine Produkthandhabungsvorrichtung 10 auf. Das Handhabungssystem 42 kann mehrere Produkthandhabungsvorrichtungen 10 aufweisen. Das Handhabungssystem 42 weist ein Formatteil 16 auf. Das Formatteil 16 ist kraft- und/oder formschlüssig mit der Produkthandhabungsvorrichtung 10 verbunden. Das Formatteil 16 ist dazu eingerichtet, ein Produkt 44 aufzunehmen, vgl. Fig. 2. Das Produkt 44 ist als ein Behälter ausgebildet. Das Produkt 44 ist in dem Formatteil 16 anordenbar. Das Produkt 44 könnte auch an dem Formatteil 16 anordenbar sein. Das Handhabungssystem 42 weist eine Handhabungsvorrichtung 28 auf. Die Handhabungsvorrichtung 28 weist einen Roboterarm auf. Der Roboterarm ist dazu eingerichtet, das Produkt 44 zu greifen und/oder aus dem Formatteil 16 zu entnehmen. Das Handhabungssystem 42 weist eine Denest-Station 68 auf. Die Denest-Station 68 ist dazu eingerichtet, die Produkte 44 zu handhaben, beispielsweise zu greifen.

Das Handhabungssystem 42 weist eine Sensoreinheit 20 auf. Die Sensoreinheit 20 ist ortsfest zu der Transportebene 18 angeordnet. Die Sensoreinheit 20 ist ortsfest zu der Denest-Station 68 angeordnet. Die Sensoreinheit 20 ist neben der Denest-Station 68 angeordnet. Alternativ könnte die Sensoreinheit 20 an einer vergleichbaren, dem Fachmann als sinnvoll erscheinenden Position angeordnet sein. Die Sensoreinheit 20 weist einen Laserdistanzsensor auf. Die Sensoreinheit 20 ist dazu eingerichtet, eine Distanz zu erfassen. Die Sensoreinheit 20 weist eine Messrichtung 32 auf. Das Handhabungssystem 42 weist eine Steuer- und/oder Regeleinheit 38 auf. Die Steuer- und/oder Regeleinheit 38 ist dazu eingerichtet, Messsignale der Sensoreinheit 20 zu verarbeiten. Die Steuer- und/oder Regeleinheit 38 ist dazu eingerichtet, die erfassten Distanzen zu verarbeiten. Das Handhabungssystem 42 weist Nester 34 auf. Es ist denkbar, dass die Nester 34 auch von der Sensoreinheit 20 vermessen werden können.

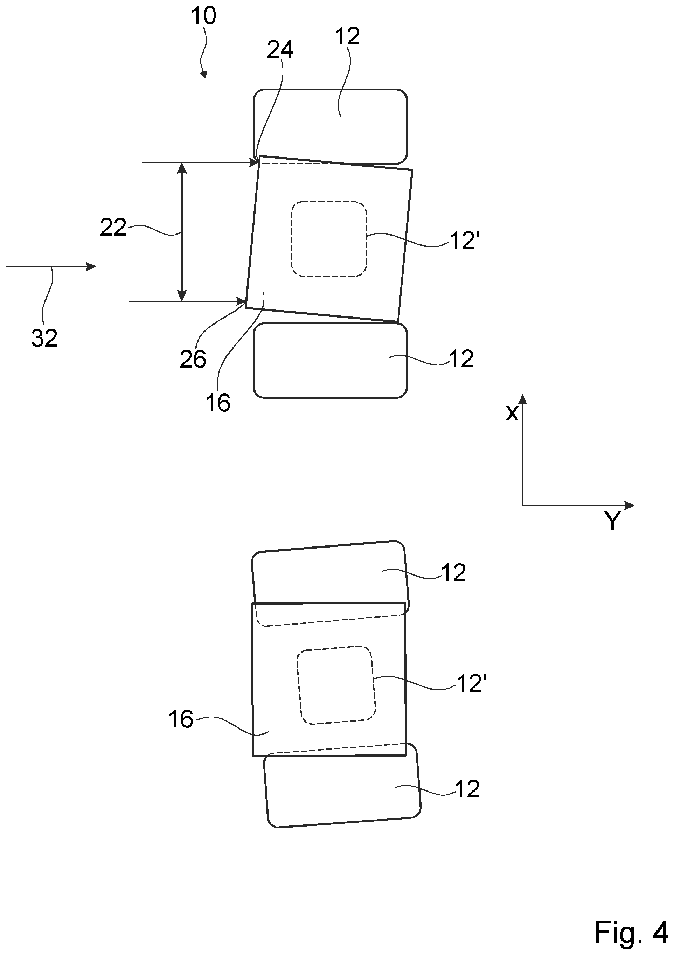

Die Figur 2 zeigt eine schematische Darstellung der Produkthandhabungsvorrichtung 10. Die Produkthandhabungsvorrichtung 10 weist zwei Mover 12 auf. Die zwei Mover 12 sind als elektrodynamisch bewegbare Mover 12 ausgebildet. Die zwei Mover 12 sind als Planarmover ausgebildet. Es ist denkbar, dass die Produkthandhabungsvorrichtung 10 mehr als zwei Mover 12 aufweist. Die zwei Mover 12 können durch einen virtuellen Mover 12' repräsentiert werden, vgl. Fig. 4. Die zwei Mover 12 können in der Transportebene 18 bewegt werden, um die Produkte 44 zu befördern. Mit dem virtuellen Mover 12' könnte die Bewegung der zwei Mover 12 beschrieben werden.

Die Produkthandhabungsvorrichtung 10 weist eine Aufnahmeeinheit 14 auf. Die Aufnahmeeinheit 14 ist an den zwei Movern 12 angeordnet. Die zwei Mover 12 sind über die Aufnahmeeinheit 14 mechanisch zueinander gekoppelt. Die zwei Mover 12 können relativ zueinander bewegt werden. Das Formatteil 16 kann in Z-Richtung bewegt werden, indem die zwei Mover 12 relativ zueinander bewegt werden. Die Aufnahmeeinheit 14 ist zu einer form- und/oder kraftschlüssigen Aufnahme des Formatteils 16 eingerichtet. Von der Aufnahmeeinheit 14 können unterschiedliche Formatteile 16 aufgenommen werden. Das Formatteil 16 weist eine erste Messmarkierung 24 auf. Das Formatteil 16 weist eine weitere Messmarkierung 26 auf. Es ist denkbar, dass das Formatteil 16 mehrere weitere Messmarkierungen 26 aufweist. Das Formatteil 16 weist einen Markierungsabstand 22 auf. Der Markierungsabstand 22 ist als ein Abstand zwischen der ersten Messmarkierung 24 und der weiteren Messmarkierung 26 gebildet. Mit der Sensoreinheit 20 kann eine Distanz zu den Messmarkierungen 24, 26 ermittelt werden.

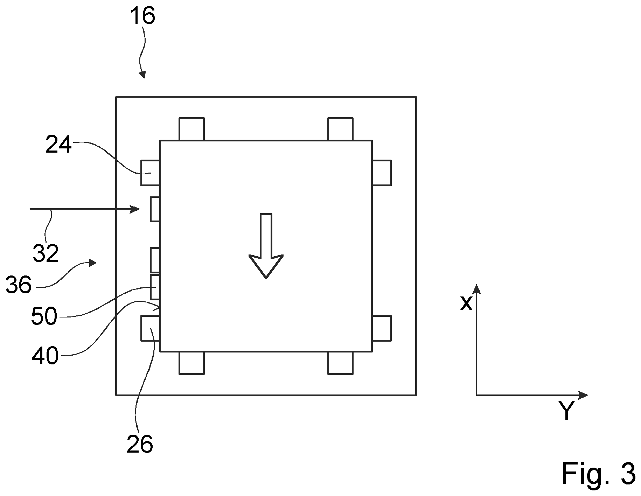

Die Figur 3 zeigt eine schematische Draufsicht des Formatteils 16. Das Formatteil 16 weist eine Außenoberfläche 40 auf, vgl. Fig. 2. Das Formatteil 16 weist eine Codiereinheit 36 auf. Die Codiereinheit 36 ist an der Außenoberfläche 40 des Formatteils 16 angeordnet. Die Codiereinheit 36 ist zwischen der ersten Messmarkierung 24 und der weiteren Messmarkierung 26 angeordnet. Alternativ oder zusätzlich könnte die Codiereinheit 36 an zwei oder mehr Seiten des Formatteils 16 angeordnet sein. Die Codiereinheit 36 weist vier Codierelemente 50 auf. Die Codiereinheit 36 könnte mehr oder weniger als vier Codierelemente 50 aufweisen. Die Codiereinheit 36 weist eine Profilerhebung auf. Die Profilerhebung ist durch Einzelprofilerhebungen der Codierelemente 50 gebildet. Ein Codierelement 50 mit einer Einzelprofilerhebung stellt eine 1 dar. Ein Codierelement 50 ohne eine Einzelprofilerhebung stellt eine 0 dar. Die Codiereinheit 36 stellt in diesem Beispiel einen Code 1011 dar. Es ist denkbar, dass ein beliebiges Höhenprofil mit unterschiedlichen Höhenabstufungen zur Codierung eingesetzt wird. Die Profilerhebung wird mit der Sensoreinheit 20 in Messrichtung 32 erfasst. Die Codiereinheit 36 wird entlang der Außenoberfläche 40 von der ersten Messmarkierung 24 bis zur weiteren Messmarkierung 26 abgetastet. Die Profilerhebung wird von der Steuer- und/oder Regeleinheit 38 in den Code übersetzt. Das Formatteil 16 kann mit dem Code eindeutig identifiziert werden.

Die Figur 4 (oben) zeigt die Produkthandhabungsvorrichtung 10 in einer schematischen Darstellung von oben. Das Formatteil 16 weist eine Lageabweichung auf. Die Lageabweichung wird durch den Markierungsabstand 22 ermittelt. Die Lageabweichung kann über den Markierungsabstand 22 eindeutig definiert werden. Die Lageabweichung umfasst eine Abweichung in Y-Richtung. Die Lageabweichung umfasst einen Winkel um eine Rotationsachse. Die Rotationsachse ist parallel zu der Z-Richtung 48 angeordnet. Die Figur 4 (unten) zeigt die Lage des Formatteils 16 nach einer Bewegung der zwei Mover 12. Die zwei Mover 12 können bewegt werden, um die Lageabweichung auszugleichen. Die zwei Mover 12 können mit einem Offset betrieben werden, welcher die Lageabweichung ausgleicht.

Die Figur 5 zeigt eine schematische Draufsicht des Formatteils 16. Das Formatteil 16 weist ein Messelement 30 auf. Das Messelement 30 ist als eine Messfläche ausgebildet. Das Messelement 30 ist parallel zu der Messrichtung 32 angeordnet ist. Das Formatteil 16 wird senkrecht zu der Messrichtung 32 hin- und herbewegt, um eine Position des Messelements 30 anzunähern. Durch das Messelement 30 kann die Position in X-Richtung ermittelt werden. Das Formatteil 16 weist ein weiteres Messelement 66 auf. Es ist denkbar, dass die Codiereinheit 36 alternativ oder zusätzlich zwischen dem Messelement 30 und dem weiteren Messelement 66 angeordnet ist.

Die Figur 6 zeigt eine schematische Darstellung der Produkthandhabungsvorrichtung 10. Die Produkthandhabungsvorrichtung 10 weist eine Lageabweichung auf. Die Lageabweichung ist als eine Planabweichung ausgebildet. Die Planabweichung ist als eine maximale Differenz einer Fläche des Formatteils 16 entlang der Z-Richtung 48 gebildet. Die Planabweichung ist als eine Differenz senkrecht zu der Transportebene 18 angeordnet. Die Planabweichung ist als eine Höhendifferenz der Fläche des Formatteils 16 gebildet. Die Höhendifferenz ist senkrecht zu der Messrichtung 32 angeordnet. Über die Planabweichung können fehlerhaft eingesetzte Formatteile 16 identifiziert werden.

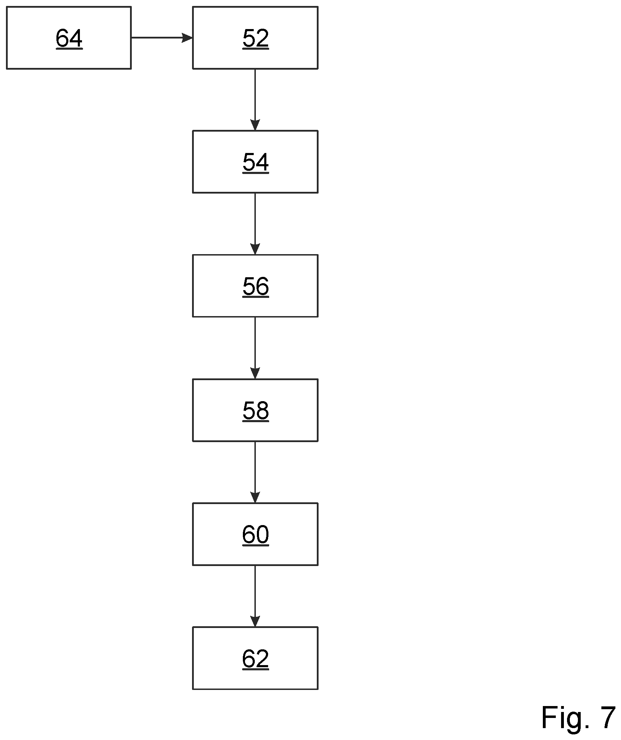

Die Figur 7 zeigt ein schematisches Ablaufdiagramm eines Verfahrens zu einem Betrieb der Produkthandhabungsvorrichtung 10.

In einem Verfahrensschritt 52 wird das Formatteil 16 kraft- und/oder formschlüssig von der Aufnahmeeinheit 14 aufgenommen. Die Aufnahmeeinheit 14 wird von den zwei Movern 12 in der Transportebene 18 bewegt. Die Aufnahmeeinheit 14 wird von den zwei Movern 12 in der Transportebene 18 befördert. Das Formatteil 16 kann entlang der Z-Richtung 48 bewegt werden, indem die zwei Mover 12 auseinanderbewegt oder aufeinander zubewegt werden.

In einem Verfahrensschritt 54 wird die Lage des Formatteils 16 relativ zur Lage der zwei Mover 12 ermittelt. Die Lage des Formatteils 12 wird mittels der Sensoreinheit 20 ermittelt. Alternativ oder zusätzlich wird die Lage des Formatteils 16 relativ zur Lage des virtuellen Movers 12' ermittelt. Die Lage des Formatteils 16 innerhalb der Transportebene 18 wird aus dem Markierungsabstand 22 ermittelt. Hierzu wird der Markierungsabstand 22 ermittelt. Der Markierungsabstand 22 wird aus einer Differenz in X-Richtung zwischen der ersten Messmarkierung 24 und der weiteren Messmarkierung 26 errechnet. Es wird die Distanz in Y-Richtung zwischen der ersten Messmarkierung 24 und dem Sensor 20 gemessen. Es wird die Distanz in Y-Richtung zwischen der weiteren Messmarkierung 26 und dem Sensor 20 gemessen. Es wird eine Ist-Lage des Formatteils 16 ermittelt. Aus dem Markierungsabstand 22 wird die Lageabweichung des Formatteils 16 zu der Lage der zwei Mover 12 ermittelt, vgl. Fig. 4 (oben). Die Lageabweichung wird ermittelt, indem eine Differenz zwischen der Ist-Lage und einer Soll-Lage des Formatteils 16 ermittelt wird. Aus dem Markierungsabstand 22 wird die Lageabweichung in Y-Richtung ermittelt. Aus dem Markierungsabstand 22 wird die Lageabweichung um die Rotationsachse ermittelt.

In einem Verfahrensschritt 56 wird die Codiereinheit 36 ausgelesen. Es wird die Profilerhebung der Codiereinheit 36 abgetastet. Es werden die Einzelprofilerhebungen der Codierelemente 50 abgetastet. Es wird die Profilerhebung der Codiereinheit 36 erfasst. Die Profilerhebung wird zur Identifikation des Formatteils 12 abgetastet. Hierzu werden die Codierelemente 50 senkrecht zu der Messrichtung 32 an der Sensoreinheit 20 vorbei bewegt. Der Verfahrensschritt 56 könnte während des Verfahrensschritts 54 durchgeführt werden. Alternativ oder zusätzlich kann der Verfahrensschritt 56 während des Verfahrensschritts 52 durchgeführt werden.

In einem Verfahrensschritt 58 wird die Lageabweichung ausgeglichen. Die Lageabweichung wird ausgeglichen, indem die zwei Mover 12 um die Lageabweichung bewegt werden, vgl. Fig. 4 (unten). Das Formatteil 16 wird von den zwei Movern 12 zur Handhabungsvorrichtung 28 ausgerichtet. Die zwei Mover 12 werden mit einem Offset betrieben, welcher die Lageabweichung ausgleicht. Es wird eine Lageabweichung in Y-Richtung ausgeglichen. Es wird eine Lageabweichung um die Rotationsachse herum ausgeglichen.

In einem Verfahrensschritt 60 wird von der Sensoreinheit 20 eine Position des Messelements 30 erfasst. Hierzu wird das Formatteil 16 senkrecht zu der Messrichtung 32 hin- und herbewegt. Bei der Hin- und Herbewegung wird die Position des Messelements 30 überfahren. Die Position des Messelements 30 wird iterativ angenähert, indem eine Distanz senkrecht zu der Messrichtung 32 abgetastet wird. An der Position des Messelements 30 wird ein Distanzsprung erfasst. Nachdem der Distanzsprung erfasst wurde, wird eine Verfahrlänge der Hin- und Herbewegung halbiert. Es wird die Position des Formatteils 16 in X-Richtung ausgeglichen, indem die Mover 12 in X-Richtung bewegt werden.

In einem Verfahrensschritt 62 wird die Planabweichung des Formatteils 16 erfasst. Die Planabweichung wird ermittelt, indem ein Höhenverlauf der Fläche des Formatteils 16 erfasst wird. Der Höhenverlauf wird erfasst, indem das Formatteil 16 parallel zu der Transportebene 18 bewegt wird. Während der Bewegung parallel zu der Transportebene 18 wird der Höhenverlauf der Fläche des Formatteils 16 erfasst. Hierzu wird eine Höhe in Z-Richtung des Formatteils 16 gemessen.

In einem Kalibrierschritt 64 wird eine Kalibrierung der Messung durchgeführt. Die Kalibrierung wird mittels eines Mastermovers ermittelt. Hierzu werden 7 Kalibrierpunkte des Mastermovers erfasst. Es werden mehrere Abstände zwischen den Kalibrierpunkten ermittelt. Die Abstände werden als ein Referenzwert für die Messung gesetzt. Der Kalibrierschritt 64 wird in regelmäßigen Abständen durchgeführt. Es ist denkbar, dass der Kalibrierschritt 64 nach einer Wartung, Reinigung, Reparatur oder einer vergleichbaren, dem Fachmann als sinnvoll erscheinenden Tätigkeit durchgeführt wird.

## Patentansprüche

1. Verfahren zu einem Betrieb einer Produkthandhabungsvorrichtung (10) mit zumindest einem elektrodynamisch bewegbaren Mover (12), insbesondere Planarmover, und mit zumindest einer Aufnahmeeinheit (14), welche an dem zumindest einen Mover (12) angeordnet ist, wobei in einem Betrieb ein Formatteil (16) kraft- und/oder formschlüssig von der Aufnahmeeinheit (14) aufgenommen und von dem Mover (12) zumindest in einer Transportebene (18), insbesondere XY-Ebene, befördert wird, **dadurch gekennzeichnet, dass** in zumindest einem Verfahrensschritt (54) eine Lage des Formatteils (16) relativ zu einer Lage des zumindest einen Movers (12) ermittelt wird.

2. Verfahren nach Anspruch 1, **dadurch gekennzeichnet, dass** die Lage des Formatteils (16) mittels einer Sensoreinheit (20), insbesondere eines Laserdistanzsensors, ermittelt wird.

3. Verfahren nach einem der vorhergehenden Ansprüche, **dadurch gekennzeichnet, dass** die Lage des Formatteils (16) innerhalb der Transportebene (18) aus zumindest einem Markierungsabstand (22) zwischen einer ersten Messmarkierung (24) des Formatteils (16) und zumindest einer weiteren Messmarkierung (26) des Formatteils (16) ermittelt wird.

4. Verfahren nach einem der vorhergehenden Ansprüche, **dadurch gekennzeichnet, dass** eine Lageabweichung des Formatteils (16) zu der Lage des zumindest einen Movers (12) aus zumindest einem Markierungsabstand (22) zwischen einer ersten Messmarkierung (24) des Formatteils (16) und zumindest einer weiteren Messmarkierung (26) des Formatteils (16) ermittelt wird.

5. Verfahren nach einem der vorhergehenden Ansprüche, **dadurch gekennzeichnet, dass** zumindest eine Lageabweichung des Formatteils (16) zu der Lage des zumindest einen Movers (12) ausgeglichen wird, indem der zumindest eine Mover (12) bewegt wird, insbesondere um das Formatteil (16) zu einer Handhabungsvorrichtung (28) auszurichten.

6. Verfahren nach einem der vorhergehenden Ansprüche, **dadurch gekennzeichnet, dass** das Formatteil (16) zumindest ein Messelement (30), insbesondere zumindest eine Messfläche, aufweist, welches zumindest im Wesentlichen parallel zu einer Messrichtung (32) einer Sensoreinheit (20) angeordnet ist, wobei eine Position des Messelements (30) iterativ angenähert wird, indem eine Distanz zumindest im Wesentlichen senkrecht zu der Messrichtung (32) abgetastet wird.

7. Verfahren nach einem der vorhergehenden Ansprüche, **dadurch gekennzeichnet, dass** eine als Planabweichung ausgebildete Lageabweichung des Formatteils (16) senkrecht zu der Transportebene (18), insbesondere in Z-Richtung, erfasst wird, indem ein Höhenverlauf des Formatteils (16) bei einer Bewegung des Formatteils (16) in der Transportebene (18), insbesondere XY-Ebene, erfasst wird.

8. Verfahren nach einem der vorhergehenden Ansprüche, **dadurch gekennzeichnet, dass** eine Codiereinheit (36) zumindest eine Profilerhebung aufweist, welche zur Identifikation, insbesondere während der Ermittlung der Lage des Formatteils (12), abgetastet wird.

9. Verfahren nach einem der vorhergehenden Ansprüche, **dadurch gekennzeichnet, dass** eine Messung, mit welcher die Lage des Formatteils (16) ermittelt wird, in zumindest einem Kalibrierschritt (64), beispielsweise mittels eines Mastermovers, kalibriert wird, indem zumindest ein Kalibrierpunkt, bevorzugt zumindest sieben Kalibrierpunkte, erfasst wird/werden und zumindest ein Abstand, bevorzugt mehrere Abstände, zwischen den Kalibrierpunkten, als ein Referenzwert gesetzt wird/werden.

10. Handhabungssystem (42) mit zumindest einem Formatteil (16), an dem, insbesondere in dem, zumindest ein zu bearbeitendes Produkt (44), insbesondere Behälter, anordenbar ist, mit zumindest einer Produkthandhabungsvorrichtung (10), welche zumindest einen elektrodynamisch bewegbaren Mover (12), insbesondere Planarmover, und zumindest eine an dem Mover (12) angeordnete Aufnahmeeinheit (14) zu einer form- und/oder kraftschlüssigen Aufnahme des Formatteils (16) umfasst, und mit zumindest einer Steuer- und/oder Regeleinheit (38) zu einer Durchführung des Verfahrens nach einem der vorhergehenden Ansprüche.

11. Formatteil (16) für ein Handhabungssystem (42) nach Anspruch 10, **gekennzeichnet durch** eine erste Messmarkierung (24) und zumindest eine weitere Messmarkierung (26).

12. Formatteil (16) nach Anspruch 11, **gekennzeichnet durch** eine Codiereinheit (36), welche an einer Außenoberfläche (40) des Formatteils (16), bevorzugt zwischen den zwei Messmarkierungen (24, 26), angeordnet ist.
